# EUROPÄISCHE PATENTSCHRIFT

(11) **EP 0 964 996 B1**
(45) Veröffentlichungstag und Bekanntmachung des Hinweises auf die Patenterteilung: **26.02.2003**
(21) Anmeldenummer: 98914873.9
(22) Anmeldetag: 06.03.1998
(51) Int. Cl.: F02N 17/04, F02P 19/02

(54) **STARTHILFSANLAGE FÜR EINEN DIESELMOTOR SOWIE VERFAHREN ZUM STARTEN EINES DIESELMOTORS**
AUXILIARY STARTING DEVICE FOR A DIESEL ENGINE AND METHOD FOR STARTING A DIESEL ENGINE
AUXILIAIRE DE DEMARRAGE POUR MOTEUR DIESEL ET PROCEDE DE DEMARRAGE D'UN MOTEUR DIESEL

(30) Priorität: 06.03.1997 DE 19709298; 17.07.1997 DE 19730713
(43) Veröffentlichungstag der Anmeldung: 22.12.1999
(73) Patentinhaber: Continental ISAD Electronic Systems GmbH & Co. oHG, 86899 Landsberg/Lech (DE)
(72) Erfinder: PELS, Thomas, 77855 Achern (DE)
(74) Vertreter: Lippich, Wolfgang, Dipl.-Pys., Dr.rer.nat.
(86) Internationale Anmeldenummer: EP9801298
(87) Internationale Veröffentlichungsnummer: WO98039566

(56) Entgegenhaltungen:
- EP-A- 0 420 379
- DE-A- 3 713 835
- DE-A- 3 743 317
- DE-A- 19 541 001

## Beschreibung

Die vorliegende Erfindung betrifft eine Startanlage für einen Dieselmotor.

Die Startwilligkeit von Dieselmotoren nimmt zu niedrigen Temperaturen hin ab. Hierfür ist einerseits eine Erhöhung des Reibmomentes verantwortlich. Andererseits senken Leck- und Wärmeverluste beim Verdichten der Luft den Kompressionsenddruck sowie die Kompressionsendtemperatur so weit ab, daß ein Start ohne Starthilfsmittel nicht mehr möglich ist. Die Temperaturgrenze hängt dabei i.a. von der Motorbauart ab. So haben direkt einspritzende Dieselmotoren mit einteiligem Brennraum (im folgenden "DI-Motoren" genannt) aufgrund geringerer Wärmeverluste ein besseres Startverhalten als Vor- und Wirbelkammer-Motoren, welche einen geteilten Brennraum aufweisen.

Üblicherweise werden bei kleinvolumigen DI-Motoren sowie Motoren mit geteiltem Brennraum Glühstiftkerzen verwendet, um das Startverhalten zu verbessern. Der Glühstift der Kerze ragt in den Brennraum bzw. in die Kammer des Motors. Neben Glühstiftkerzen sind auch Glühkerzen (im engeren Sinn) üblich, d.h. Glühkerzen mit freiliegendem Glühdraht. Bei großvolumigen Dieselmotoren beruht die Starthilfe häufig auf einer Vorwärmung der angesaugten Luft mit Hilfe von elektrisch beheizbaren Anheizkerzen oder Heizflanschen.

Um den Dieselmotor bei tiefen Temperaturen starten zu können, wird die Heizeinrichtung, z.B. die Glühstiftkerzen, aus der Fahrzeugbatterie mit elektrischer Energie gespeist, welche in Wärme umgewandelt wird. Die bei diesem Vorglühvorgang zur Verfügung stehende elektrische Leistung wird durch den maximal möglichen Entladestrom der Batterie begrenzt. Dieser nimmt mit sinkender Temperatur ab, verhält sich also entgegengesetzt zu dem Leistungsbedarf als Funktion der Temperatur. Ein in einem Glühzeitsteuergerät eingebauter Temperaturfühler steuert die Dauer der benötigten Vorglühzeit. Der Ablauf der Vorglühdauer - d.h. der Eintritt der Startbereitschaft - wird z.B. durch Erlöschen einer Kontrollampe signalisiert.

Durch die eingeschränkte Speiseleistung beträgt die Vorglühzeit bei heute verbreiteten kleinvolumigen DI-Motoren etwa 2-5 Sekunden (bei einem Kaltstart). Diese relativ lange Wartezeit vor dem Eintritt der Startbereitschaft stellt ein gewisses Sicherheitsrisiko in Gefahrensituationen, in denen ein sofortiges Wegfahren erforderlich ist, sowie eine Komforteinbuße dar.

DE 195 32 163 A1 und WO 97/08439 beschreiben Anordnungen, bei denen ein Kurzzeitspeicher eines Starters auch verschiedene Hochleistungsverbraucher versorgt. Hierbei handelt es sich um Verbraucher, die erst nach dem Start benutzt werden.

Es wurden bereits verschiedene Vorschläge für Weiterentwicklungen von Vorglühanlagen gemacht. Aus der DE 195 41 001 A1 ist eine Anordnung bekannt, bei der eine Glühanlage mit einer gegenüber einer Bordnetzspannung erhöhten Spannung aus einem Kondensator gespeist wird. Hierdurch soll erzielt werden, daß die Starterbatterie zur Speisung eines elektrischen Startermotors nicht durch den Glühvorgang belastet wird.

Aus der DE 37 13 835 A1 ist es bekannt, Glühkerzen eines Dieselmotors mit einer Überspannung zu betreiben, um die Aufheizzeit zu verkürzen. Als Beispiel wird der Betrieb von 6-Volt-Glühkerzen mit einer Spannung von 12 Volt erwähnt.

Die EP 0 420 379 B1 schlägt vor, Glühkerzen für einen Dieselmotor aus einer Reihenschaltung zweier Kondensatoren zu speisen, die beim Aufladen parallel geschaltet werden. Diese Parallel/Serien-Wechselschaltung bewirkt eine Speisung der Glühkerzen mit doppelter Batteriespannung.

Als allgemeiner Stand der Technik betreffend eine Stromversorgung im Kraftfahrzeug sei die DE 37 43 317 A1 genannt. Sie offenbart das Speisen von anderen Verbrauchern (d.h. keinen Glühkerzen o.ä.) aus einem Gleichspannungs-Zwischenkreis mit erhöhter Zwischenkreisspannung. Ein Gleichspannungs-Zwischenkreis mit erhöhter Zwischenkreisspannung ist z.B. auch in der DE 195 32 163 A1 beschrieben.

Die vorliegende Erfindung zielt darauf ab, eine verbesserte Startanlage für einen Dieselmotor anzugeben.

Gemäß Anspruch 1 stellt die Erfindung eine Startsanlage für einen Dieselmotor bereit, welche folgendes umfaßt:
- einen drehfest mit der Kurbelwelle des Dieselmotors verbundenen und auf ihr sitzenden elektrischen Starter;
- wenigstens eine elektrisch gespeiste Heizeinrichtung zum Verbessern des Startverhaltens des Dieselmotors;
- eine zum Ansteuern des Starters dienende Wechselrichter-Anordnung mit einem Zwischenkreis, der auf einem gegenüber einem Bordnetz erhöhten Spannungsniveau liegt;
- einen zum Speisen von Heizeinrichtung und Starter dienenden Energiespeicher, der aus dem Zwischenkreis auf eine gegenüber dem Bordnetz erhöhte Spannung aufgeladen wird;
- eine Heizsteuereinrichtung, welche die Speisung der Heizeinrichtung unter Entnahme elektrischer Energie aus dem Energiespeicher steuert;
- wobei die Startanlage so ausgebildet ist, daß die Speisung der Heizeinrichtung und des Starters aus dem Energiespeicher bei erhöhter Spannung erfolgt.

In der Praxis konnten sich bisher Vorschläge zur Speisung von Glühstiftkerzen o.ä. aus Kondensatorspeichern nicht durchsetzen. Andere Vorschläge, die dahingehen, Glühkerzen mit einer aus der Bordbatterie gewonnenen geringfügigen Überspannung zu speisen, verkürzen zwar die erforderlichen Glühzeiten, haben jedoch-soweit ersichtlich - ebenfalls keine weite Verbreitung gefunden. Der vorliegenden Erfindung liegt der Gedanke zugrunde, einen Energiespeicher für die Heizeinrichtung nicht mit dem Bordnetz, sondern mit dem Zwischenkreis einer (unten näher erläuterten) Wechselrichter-Anordnung zu koppeln. Der Energiespeicher kann so mit nur geringem Zusatzaufwand auf relativ hohe Spannungen aufgeladen werden. Die Speisung der Heizeinrichtung kann dann mit relativ hoher Leistung erfolgen. Dies erlaubt wesentlich kürzere Vorheizzeiten (z.B. Vorglühzeiten) als im Stand der Technik. Die Erfindung leistet damit einen Beitrag zur Erhöhung der Verkehrssicherheit sowie auch des Fahrkomforts.

Es sei angemerkt, daß die im Anspruch 1 erwähnte Speisung der Heizeinrichtung aus dem Energiespeicher zwar vorzugsweise, aber keineswegs zwingend, im ausschließlichen Sinn gemeint ist. So ist es möglich, daß nur ein Teil der Speiseenergie dem Energiespeicher, ein anderer Teil hingegen der (auf niedriger Spannung liegenden) Bordnetzbatterie entnommen wird. Die Speisung kann auch nur zeitweise vollständig aus dem Energiespeicher erfolgen, zu anderen Zeiten hingegen ganz oder teilweise aus der Bordnetzbatterie. Falls beispielsweise eine weitere Speisung der Heizeinrichtung nach dem Start des Dieselmotors erforderlich ist (z.B. Nachglühen in der ersten Anfahrphase oder Glühen beim Schubbetrieb) kann die Speisung nach erfolgtem Start aus einem Generator erfolgen. vorzugsweise wird in all diesen Fällen die Speiseenergie dem Zwischenkreis entnommen.

Für die Anordnung die Energiespeichers werden zwei vorteilhafte Alternativen vorgeschlagen: Bei der ersten Alternative gemäß Anspruch 2 ist zwischen den Energiespeicher und den Zwischenkreis eine Ladeeinrichtung geschaltet ist, welche die Aufladung des Energiespeichers durch Energieentnahme aus dem Zwischenkreis steuert. Im einfachsten Fall wird dabei der Energiespeicher auf das Spannungsniveau des Zwischenkreises aufgeladen. Die Ladeeinrichtung ist dann (im Falle eines Gleichspannungs-Zwischenkreises) beispielsweise als Schalter ausgebildet, welcher den Energiespeicher direkt mit dem Zwischenkreis koppeln und von ihm trennen kann. Es ist aber auch möglich, den Energiespeicher auf höhere oder niedrigere Spannungen als die im Zwischenkreis vorherrschende Spannung aufzuladen. In diesem Fall kann die Ladeeinrichtung als Hochsetz- bzw. Tiefsetzsteller ausgebildet sein. Im Fall eines Wechselspannungs-Zwischenkreises kann die Ladeeinrichtung ferner als Gleichrichter ausgebildet sein.

Bei der zweiten Alternative gemäß Anspruch 3 ist der Energiespeicher direkt in den Zwischenkreis geschaltet. Vorzugsweise handelt es sich hierbei um den in der Regel in einem Gleichspannungs-Zwischenkreis vorhandenen Speicher (z.B. einen Kondensator), welcher die Spannung im Zwischenkreis auch bei mit großer Flankensteilheit ansteigender Stromentnahme annähernd konstant hält.

Gemäß Anspruch 4 handelt es sich bei dem Energiespeicher vorzugsweise um einen Kondensatorspeicher und/oder eine Kurzzeitbatterie. Der Kondensatorspeicher ist z.B. durch eine Parallelschaltung mehrerer Kondensatoren mit ausreichend großer Kapazität gebildet. Unter "Kurzzeitbatterie" wird eine hochbelastbare, schnell entladbare Batterie verstanden, wie sie z.B.in der WO 97/08439 beschrieben ist. Insbesondere beträgt ihre Entladedauer weniger als 7 Minuten, vorzugsweise weniger als 4 Minuten. Unter Entladedauer wird hier die minimale Zeitdauer zwischen Vollade- und Entladezustand bei höchster zulässiger Dauerbelastung verstanden. Der maximale Entladestrom beträgt insbesondere mehr als 10 CA, vorzugsweise mehr als 15 CA. Die Leistungsdichte beträgt insbesondere mehr als 250 W/kg, vorzugsweise mehr als 300 W/kg. Die Kurzzeitbatterie ist vorzugsweise ein alkalisches Sekundärsystem, vorzugsweise ein Nickel/Cadmium-System oder ein Nickel/Eisen-System. Die Kurzzeitbatterie enthält insbesondere Sinterelektroden, vorzugsweise als Sinterplatten oder Sinterfolienplatten ausführt, oder Faserstruktur-Elektroden. Bei letzteren besteht die Elektrode beispielsweise aus einer dreidimensionalen Polypropylenfaserstruktur.

Gemäß Anspruch 5 ist die Heizeinrichtung vorzugsweise eine Glühstiftkerze (d.h. eine Kerze mit gekapseltem Glühdraht), eine Glühkerze (mit offenliegendem Glühdraht), eine Anheizkerze und/oder ein Heizflansch sein. Während die ersten beiden direkt die Zündung des Kraftstoffs hervorrufen, dienen die letzten beiden der Vorwärmung der Ansaugluft.

Ansprüche 6 und 7 geben bevorzugte Werte für das erhöhte Spannungsniveau des Zwischenkreises an. Bevorzugt ist ein Spannungsniveau, welches am oberen Rand des Niederspannungsbereichs liegt, in dem noch keine Vorkehrungen gegen die Berührung von Leitern (Berührungsschutz) getroffen werden muß. Es handelt sich hierbei um Spannungen größer als ca. 40 Volt. Besonders bevorzugt sind wesentlich größere Spannungen, z.B. im Bereich von 200-400 Volt. Diese erlauben den Transport relativ großer Leistungen bei niedrigen Strömen.

Gemäß Anspruch 8 handelt es sich bei dem Zwischenkreis vorzugsweise um einen Gleichspannungs-Zwischenkreis. Gemäß Anspruch 9 hat die als Starter dienende elektrische Maschine auch die Funktion eines Generators. Hierbei handelt es sich vorteilhaft um eine Drehstrommaschine. Zum Betreiben als Starter entnimmt der Wechselrichter elektrische Energie aus einer im Niederspannungs-Bordnetz angeordneten Batterie, setzt diese z.B. mit Hilfe eines Hochsetzstellers in das erhöhte Spannungsniveau des Zwischenkreises um, und wandelt die dem Zwischenkreis entnommene Energie in Wechsel- oder Drehstrom frei einstellbarer Frequenz, Amplitude und Phase um. Auch im Generatorbetrieb erzeugt der Wechselrichter Drehfelder. Da die Stromrichtung hier umgekehrt ist, wird jedoch von der elektrischen Maschine elektrische Energie erzeugt, die zunächst dem Zwischenkreis mit seinem erhöhten Spannungsniveau und anschließend, z.B.nach Spannungsherabsetzung, der Niederspannungsbatterie oder anderen Verbrauchern zugeführt wird.

Der Energiespeicher hat neben der Speisung der Heizeinrichtung eine weitere Funktion, und zwar dient er zum Speisen der elektrischen Maschine (wobei dies in einem nicht ausschließlichen Sinn zu verstehen ist, es sich also um eine zusätzliche Speisung handeln kann). Dies ist besonders vorteilhaft in solchen Betriebszuständen, in denen die elektrische Maschine einen hohen Leistungsbedarf hat, so etwa gemäß Anspruch 10 beim Starten oder wenn sie den Verbrennungsmotor beim Beschleunigen des Fahrzeugs unterstützt ("elektrischer Booster") oder zeitweise den Antrieb des Fahrzeugs vollständig übernimmt (nach Art eines Hybridfahrzeugs).

Die Erfindung wird nun anhand von Ausführungsbeispielen und der angefügten schematischen Zeichnung näher erläutert. In der Zeichnung zeigen:
- Fig. 1: ein Antriebssystem mit einem Dieselmotor und einem Ausführungsbeispiel einer erfindungsgemäßen Startanlage;
- Fig. 2: ein Antriebssystem gemäß Fig.1 mit einer anderen Ausführungsform der Startanlage; und
- Fig. 3: ein Flußdiagramm zum Starten des Dieselmotors mit Hilfe der in Fig. 1 oder 2 dargestellten Startanlage.

Funktionsgleiche oder -ähnliche Teile tragen gleiche Bezugszeichen.

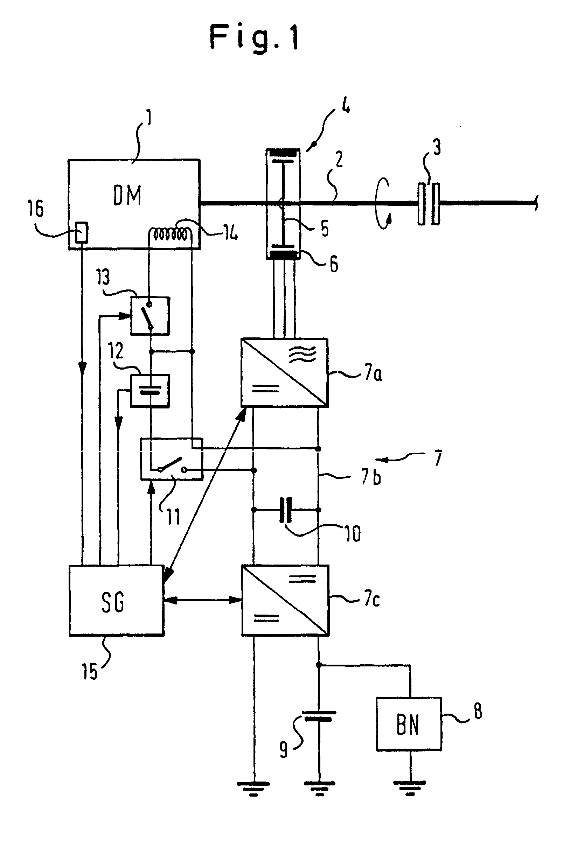

Das Antriebssystem gemäß Fig. 1 ist z.B. für ein Kraftfahrzeug, etwa einen Personenkraftwagen bestimmt. Es weist einen Dieselmotor 1 auf, der Drehmoment über eine Antriebswelle 2 (z.B. die Kurbelwelle des Dieselmotors 1), eine Kupplung 3 und weitere (nicht gezeigte) Teile eines Antriebsstrangs auf die Antriebsräder des Fahrzeugs abgibt. Auf der Antriebswelle 2 sitzt eine als Starter, Zusatzantriebsaggregat und Generator dienende elektrische Maschine 4, hier eine Asynchron-Drehstrommaschine. Sie weist einen direkt auf der Antriebswelle 2 sitzenden und drehfest mit ihr verbundenen Läufer 5 sowie einen z.B. am Gehäuse des Dieselmotors 1 abgestützten Ständer 6 auf. Die (nicht dargestellte) Wicklung des Ständers 6 wird durch einen Wechselrichter 7 mit elektrischen Strömen und Spannungen praktisch frei einstellbarer Amplitude, Phase und Frequenz gespeist. Es handelt es sich um einen Gleichspannungs-Zwischenkreis-Wechselrichter, welcher aus einer im wesentlichen konstanten Zwischenkreis-Gleichspannung mit Hilfe von elektronischen Schaltern z.B. sinusbewertete breitenmodulierte Pulse herausschneidet, die - gemittelt durch die Induktivität der elektrischen Maschine 4 - zu nahezu sinusförmigen Strömen der gewünschten Frequenz, Amplitude und Phase führen.

Der Wechselrichter ist im wesentlichen aus einem maschinenseitigen Gleichspannungs-Wechselspannungs-Umrichter 7a, einem Gleichspannungs-Zwischenkreis 7b und einem bordnetzseitigen Gleichspannungswandler 7c aufgebaut. Letzterer ist mit einem Fahrzeugbordnetz 8 und einem Bordnetz-Langzeitspeicher 9, hier einer herkömmlichen Blei-Schwefelsäure-Batterie, gekoppelt. Das Bordnetz 8 und die Bordnetzbatterie 9 liegen auf einem niedrigen Spannungsniveau, z.B. 12 oder 24 Volt. Der Zwischenkreis 7b liegt demgegenüber auf einer erhöhten Spannung, die vorteilhafterweise im Bereich zwischen 200 und 400 Volt liegt. Bei hohen Spannungen sind nämlich die Halbleiterverluste im Umrichter 7a relativ klein; ferner können die Leiterquerschnitte der Wicklungen der elektrischen Maschine 4 kleiner dimensioniert sein als bei niedrigen Spannungen. Vorteilhaft sind aber auch niedrigere Spannungen, die etwa im oberen Teil des Niederspannungsbereichs, also z.B. oberhalb 40 Volt liegen. Hierbei kann auf eine vollständige Isolation spannungsführender Teile verzichtet werden; andererseits machen sich bereits die o.g. mit höherer Spannung einhergehende Vorteile bemerkbar. In den Zwischenkreis 7b ist ein Kondensator 10 geschaltet, welcher die Spannung im Zwischenkreis auch bei mit großer Flankensteilheit ansteigender Stromentnahme - die bei Erzeugung von Pulsen durch den Umrichter 7a vorliegt - annähernd konstant hält.

In den Zwischenkreis 7b ist ferner eine Ladeeinrichtung 11 geschaltet, mit der wiederum ein Kurzzeit-Energiespeicher 12 gekoppelt ist. Sie steuert die Stromentnahme aus dem Zwischenkreis 7b zur Ladung des Energiespeichers 12. Bei dem dargestellten Beispiel wird der Energiespeicher 12 auf das gleiche Spannungsniveau wie der Zwischenkreis 7b aufgeladen, die Ladeeinrichtung 11 fungiert also als Stromsteuergerät, im einfachsten Fall als Schalter. Bei anderen (nicht gezeigten) Ausführungsformen, bei denen der Energiespeicher 12 auf höhere oder niedrigere Spannungen als der Zwischenkreis 7b aufgeladen wird, hat sie zusätzlich die Funktion eines Spannungswandlers zu höheren bzw. niedrigeren Spannungen. Der Energiespeicher 12 ist aus einer Parallelschaltung von Kondensatoren hoher Kapazität aufgebaut. Bei anderen (nicht gezeigten) Ausführungsformen besteht er aus einer oder mehreren Kurzzeitbatterien. Der Energiespeicher 12 ist wiederum über eine Schalteinrichtung 13, hier in Form von Leistungshalbleiterschaltern, mit einer Heizeinrichtung 14, die das Starten des Dieselmotors 1 erleichtert, verbunden. Hierbei handelt es sich z.B. um jeweils eine in die Brennräume des Dieselmotors 1 ragende Glühstiftkerze, und/oder eine sog. Anheizkerze, die die Ansaugluft vorwärmt.

Die elektrische Maschine 4 kann nach dem Startvorgang, (bei dem sie elektrische Energie benötigt), als Generator fungieren, d.h. elektrische Energie liefern. Daneben kann sie als elektrischer Booster fungieren, d.h. den Dieselmotor 1 bei Fahrzeugbeschleunigungen unterstützen. Sie kann ferner - nach Art eines Hybridfahrzeugs - den Fahrzeugantrieb zeitweise allein übernehmen. Der Wandler 7c ist als bidirektionaler Wandler ausgebildet. Er kann einerseits, wenn die elektrische Maschine 4 als Motor betrieben wird und dabei aus der Bordnetzbatterie 9 gespeist wird, elektrische Energie aus der Bordnetzbatterie 10 in den Zwischenkreis 7b bringen, und andererseits, wenn sie als Generator betrieben wird, Energie aus dem Zwischenkreis 7b zwecks Speisung der Verbraucher des Bordnetzes 8 und der Bordnetzbatterie 9 überführen.

Die Kapazität des Energiespeichers 12 ist so bemessen, daß sie auch bei tiefen Temperaturen ausreicht, um den Dieselmotor 1 für einen sicheren Start ausreichend vorzuheizen, z.B. vorzuglühen. Bei größerer Dimensionierung kann der Energiespeicher 12 vorteilhaft auch dazu dienen, der elektrischen Maschine 4 über den Umrichter 7a elektrische Energie zu liefern. Besonders vorteilhaft dient der Energiespeicher 12 auch dazu, die zum elektrischen Boosten benötigte Energie zwischenzuspeichern und der elektrischen Maschine 4 bei Fahrzeugsbeschleunigung kurzzeitig hohe elektrische Leistung über den Umrichter 7a zu liefern. Für die beiden letztgenannten Anwendungen ist die Ladeeinrichtung 11 bidirektional ausgebildet. Das heißt, sie kann elektrische Energie sowohl aus dem Zwischenkreis 7b in den Energiespeicher 12 als auch in umgekehrter Richtung aus dem Energiespeicher 12 in den Zwischenkreis 7b überführen und dabei gegebenenfalls spannungsheraufsetzend oder -herabsetzend wirken. Ein übergeordnetes Steuergerät 15 steuert den Wechselrichter 7, und zwar den Umrichter 7a und den Wandler 7c, sowie die Ladeeinrichtung 11 und die Schalteinrichtung 13. Es gibt dem Umrichter 7a Amplitude, Phase und Frquenz der zu erzeugenden Dreiphasenspannung vor. Dem Wandler 7c gibt es den Strombetrag, die Stromrichtung und den Betrag der Spannungsherauf- bzw.-herabsetzung vor. Der Ladeeinrichtung 11 gibt es vor, welchen Strombetrag diese aus dem Zwischenkreis 7b entnehmen oder in ihn einspeisen soll und dem Energiespeicher 12 zuführen bzw. ihr entnehmen soll. Das Steuergerät 15 steuert auch die Schalteinrichtung 13 und damit auch Beginn und Ende des Beheizvorgangs (z.B. des Glühvorgangs). Es empfängt u.a. Eingangssignale von einem Temperatursensor 16, der Information z.B. über die Kühlmitteltemperatur des Dieselmotors 1 liefert.

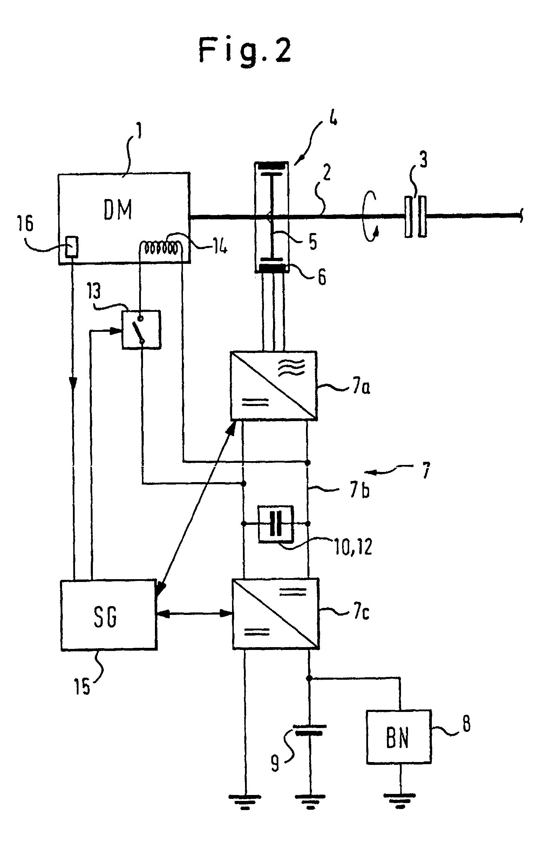

Das Ausführungsbeispiel gemäß Fig. 2 entspricht demjenigen gemäß Fig. 1. Im Unterschied zu letzterem übernimmt bei ihm jedoch der Zwischenkreiskondensator 10 (oder - alternativ - eine schnelle Batterie) die Funktion des Energiespeichers 12. Eine Laderichtung ist hier nicht vorhanden. Der Zwischenkreiskondensator 10 ist mit ausreichender Kapazität für seine (Zusatz-)Aufgabe als Speicher für die Heizenergie ausgestattet. Da er direkt im Zwischenkreis 7b sitzt, wird er unmittelbar auf das Spannungsniveau des Zwischenkreises 7b aufgeladen.

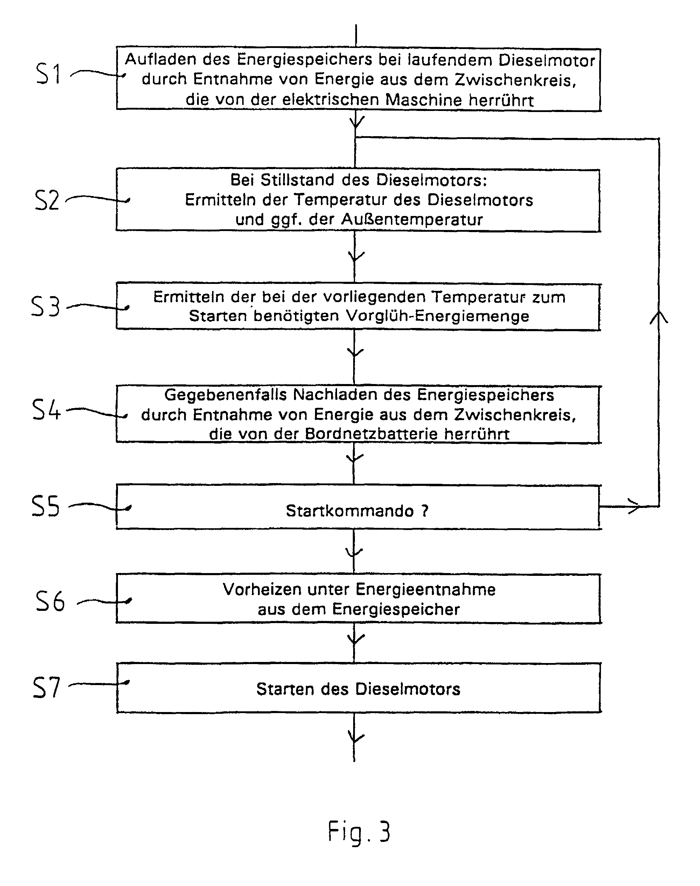

Im folgenden wird die Funktion des Antriebssystems mit Startanlage gemäß Fig. 1 und 2 anhand des Flußdiagramms gemäß Fig. 3 erläutert: Im Schritt S1 wird der Energiespeicher 12 aufgeladen. Die Aufladung erfolgt auf einen hohen vorbestimmten Wert, der beim Ausführungsbeispiel gemäß Fig. 2 (und ggf. auch bei demjenigen gemäß Fig. 1) der Zwischenkreisspannung entspricht. Sie erfolgt bei laufendem Dieselmotor 1 aus der dann als Generator fungierenden elektrischen Maschine 4. Bei längerem Fahrzeugstillstand entlädt sich der Kondensatorspeicher 12 aber allmählich, so daß er dann ganz oder teilweise durch Energieentnahme aus der Bordnetzbatterie 9 aufzuladen ist. Die im Energiespeicher 12 noch vorhandene Energiemenge kann z.B. einfach aus der von ihm aufgebrachten Spannung bestimmt werden, um in Bereitschaft für einen Beheizvorgang, z.B. Vorglühvorgang zu bleiben. Das Nachladen braucht in der Regel erst nach längerem Motorstillstand erfolgen, da der Energiespeicher 12 i.a. bei laufendem Motor 1 voll aufgeladen worden ist, also auf einen Wert, der über dem für die Starthilfe benötigten Mindestwert liegt. Hierzu werden bei Motorstillstand die folgenden Schritte ausgeführt: Im Schritt S2 ermittelt das Steuergerät 15 die momentane Motortemperatur anhand der vom Temperatursensor 16 gelieferten Meßinformation sowie ggf. die Umgebungstemperatur anhand eines (in Fig. 1 nicht gezeigten) Außentemperatursensors. Im Schritt S3 ermittelt das Steuergerät 15 z.B. anhand eines abgespeicherten Kennfeldes diejenige Energiemenge, die erwartungsgemäß bei der im vorangegangenen Schritt ermittelten Temperatur (bzw. bei dem ermittelten Temperaturpaar) für eine erfolgreiche Starthilfe, z.B. in Form von Vorglühen und/oder Vorheizen benötigt wird. Falls die im Energiespeicher 12 noch vorhandene Energiemenge, die im vorangegangenen Schritt ermittelte benötigte Menge unterschreitet, veranlaßt das Steuergerät 15 im Schritt S4 ein Nachladen des Energiespeichers 12 durch Entnahme von Energie, welche von der Bordnetzbatterie 9 herrührt, aus dem Zwischenkreis 7b. Die im Energiespeicher 12 noch vorhandene Energiemenge kann z.B. einfach aus der von ihm noch aufgebrachten Spannung bestimmt werden. Das Nachladen muß in der Regel erst nach längerem Motorstillstand erfolgen, da der Energiespeicher v.a. bei laufendem Motor voll aufgeladen worden ist, also auf einen Wert, der über dem für die Starthilfe benötigten Mindestwert liegt. Im Schritt S5 fragt das Steuergerät 15 ab, ob ein Kommando zum Start des Dieselmotors - etwa durch Betätigung des Startschlüssels - gegeben wurde. Falls dies nicht der Fall ist, führt das Steuergerät 15 die Schritte S2 bis S5 wiederholt aus, um den Energiespeicher 12 permanent in Bereitschaft zu halten, d.h. in einem Ladungszustand, welcher für eine erfolgreiche Starthilfe ausreichend ist. Im Schritt S6 veranlaßt das Steuergerät 15, daß die Heizeinrichtung 14, (z.B. Glühstiftkerzen) durch Schließen der Schalteinrichtung 13 kurzfristig mit sehr hoher Leistung aus dem Energiespeicher 12 gespeist wird. Die gesamte Heiz-Energiemenge wird dadurch in kürzester Zeit vollständig in Wärmeenergie umgewandelt, so daß sehr kurze Vorheizzeiten von weniger als einer Sekunde erzielbar. Im Schritt S7 wird schließlich der Dieselmotor 1 gestartet.

Insgesamt erlaubt die Erfindung ein praktisch verzögerungsfreies Starten eines kalten Dieselmotors. Die Erfindung dient damit einerseits der Verkehrssicherheit, da sie ein schnelleres Losfahren im Gefahrenfall erlaubt, andererseits erhöht sie den Komfort. Sie kann damit die Akzeptanz von Dieselfahrzeugen erhöhen. Die Erfindung leistet damit einen Beitrag zum Umweltschutz sowie zur Schonung knapper Resourcen.

## Patentansprüche

1. Startanlage für einen Dieselmotor (1), mit:
- einem drehfest mit der Kurbelwelle (2) des Dieselmotors (1) verbundenen und auf ihr sitzenden elektrischen Starter (4);
- wenigstens einer elektrisch gespeisten Heizeinrichtung (14) zum Verbessern des Startverhaltens des Dieselmotors (1) ;
- einer zum Ansteuern des Starters (4) dienende Wechselrichter-Anordnung (7) mit einem Zwischenkreis (7b), der auf einem gegenüber einem Bordnetz (8) erhöhten Spannungsniveau liegt;
- einer Bordnetzbatterie (9), die mit dem Zwischenkreis (7b) über einen Spannungswandler (7c) verbunden ist;
- einen zum Speisen von Heizeinrichtung (14) und Starter (4) dienenden Energiespeicher (12), der aus dem Zwischenkreis (7b) auf eine gegenüber dem Bordnetz (8) erhöhte Spannung aufgeladen wird;
- einer Heizsteuereinrichtung (13), welche die speisung der Heizeinrichtung (14) derart steuert, daß ein Teil der Speiseleistung dem Energiespeicher (12) und ein anderer Teil der Bordnetzbatterie (9) entnommen wird;
- wobei die Startanlage so ausgebildet ist, daß die Speisung der Heizeinrichtung (14) und des Starters (4) bei erhöhter Spannung erfolgt.

2. Startanlage nach Anspruch 1, bei welcher zwischen den Energiespeicher (12) und den Zwischenkreis (7a) eine Ladeeinrichtung (11) geschaltet ist.

3. Startanlage nach Anspruch 1, bei welcher der Energiespeicher (12) direkt in den Zwischenkreis (7b) geschaltet ist.

4. Startanlage nach einem der Ansprüche 1 bis 3, bei welcher der Energiespeicher (14) ein Kondensatorspeicher und/oder eine Kurzzeitbatterie ist.

5. Startanlage nach einem der Ansprüche 1 bis 4, bei welcher die Heizeinrichtung (14) eine Glühkerze, eine Glühstiftkerze, eine Anheizkerze und/oder ein Heizflansch ist.

6. Startanlage nach einem der Ansprüche 1 bis 5, bei welcher das erhöhte Spannungsniveau des Zwischenkreises (7b) oberhalb 40 Volt, insbesondere oberhalb 100 Volt liegt.

7. Startanlage nach Anspruch 6, bei welcher das erhöhte Spannungsniveau des Zwischenkreises (7b) im Bereich zwischen 200 Volt und 400 Volt liegt.

8. Startanlage nach Anspruch 5, bei welcher der Zwischenkreis (7b) ein Gleichspannungs-Zwischenkreis ist.

9. Startanlage nach einem der Ansprüche 1 bis 8, bei welcher die als Starter dienende elektrische Maschine (4) auch die Funktion eines Generators hat und insbesondere eine Drehstrommaschine ist.

10. Startanlage nach Anspruch 9, bei welcher die als Starter dienende elektrische Maschine (4) auch eine Funktion als Fahrzeug-Antriebsmotor oder -Hilfsantriebsmotor hat und auch dabei ganz oder teilweise aus dem Energiespeicher (12) gespeist wird.

## Claims

1. A starting unit for a diesel engine (1) having:
- an electrical starter (4) which is connected to rotate in unison with the crankshaft (2) of this diesel engine (1) and is seated on said crankshaft;
- at least one electrically fed heating device (14) to improve the starting behaviour of this diesel engine (1);
- an inverter arrangement (7) serving to control the starter (4), having an intermediate circuit (7b) which lies at an increased voltage level in comparison with an on-board power supply (8);
- an on-board battery (9), which is connected to the intermediate circuit (7b) via a voltage converter (7c);
- an energy accumulator (12), serving to feed the heating device (14) and starter (4), which is charged from the intermediate circuit (7b) to a higher voltage in comparison with the on-board power supply (8);
- a heating control device (13), which controls the supply of the heating device (14) in such a manner that a part of the supply power is removed from the energy accumulator (12) and another part from the on-board battery (9);
- in which the starting unit is designed so that the supply of the heating device (14) and of the starter (4) takes place at increased voltage.

2. A starting unit according to Claim 1, in which a charging device (11) is connected between the energy accumulator (12) and the intermediate circuit (7a).

3. A starting unit according to Claim 1, in which the energy accumulator (12) is connected directly into the intermediate circuit (7b).

4. A starting unit according to one of Claims 1 to 3, in which the energy accumulator (14) is a capacitor accumulator and/or a short-time battery.

5. A starting unit according to one of Claims 1 to 4, in which the heating device (14) is a heater plug, a sheathed-element heater plug, a heating-up plug and/or a heating flange.

6. A starting unit according to one of Claims 1 to 5, in which the increased voltage level of the intermediate circuit (7b) is above 40 volts, in particular above 100 volts.

7. A starting unit according to Claim 6, in which the increased voltage level of the intermediate circuit (7b) lies in the range between 200 volts and 400 volts.

8. A starting unit according to Claim 5, in which the intermediate circuit (7b) is a dc intermediate circuit.

9. A starting unit according to one of Claims 1 to 8, in which the electric machine (4) serving as the starter also has the function of a generator and in particular a three-phase machine.

10. A starting unit according to Claim 9, in which the electric machine (4) serving as the starter also has a function as a vehicle driving motor or auxiliary driving motor and is also fed completely or to some extent from the energy accumulator (12).

## Revendications

1. Installation de démarrage pour moteur diesel (1) avec
- un démarreur électrique (4) relié en solidarité de rotation avec le vilebrequin (2) du moteur diesel (1) et disposé sur vilebrequin ;
- au moins un dispositif de chauffage (14) à alimentation électrique servant à améliorer la fonction de démarrage du moteur diesel (1) ;
- un ensemble d'onduleurs (7) servant à activer le démarreur (4) avec un circuit intermédiaire (7b), qui a un niveau de tension supérieur à celui d'un réseau de bord (8) ;
- une batterie du réseau de bord (9), qui est reliée au circuit intermédiaire (7b) par le biais d'un convertisseur de tension (7c) ;
- un accumulateur d'énergie (12) servant à alimenter le dispositif de chauffage (14) et le démarreur (4) et dont le chargement a lieu à partir du circuit intermédiaire (7b) pour atteindre une tension plus importante par rapport à celle du réseau de bord (8) ;
- un dispositif de pilotage du chauffage (13), qui pilote l'alimentation du dispositif de chauffage (14) de telle manière qu'une partie de la puissance de d'alimentation soit prélevée sur l'accumulateur d'énergie (12) et une autre partie sur la batterie du réseau de bord (9),
l'installation de démarrage étant conçue de telle façon que l'alimentation du dispositif de chauffage (14) et du démarreur (4) ait lieu avec une tension plus élevée.

2. Installation de démarrage selon la revendication 1, dans laquelle entre l'accumulateur d'énergie (12) et le circuit intermédiaire (7a) est placé un dispositif de chargement (11).

3. Installation de démarrage selon la revendication 1, dans laquelle l'accumulateur d'énergie (12) est intégré directement dans le circuit intermédiaire (7b).

4. Installation de démarrage selon l'une des revendications 1 à 3, dans laquelle l'accumulateur d'énergie (12) est un accumulateur à condensateur et/ou une batterie d'alimentation sur une courte durée.

5. installation de démarrage selon l'une des revendications 1 à 4, dans laquelle le dispositif de chauffage (14) est une bougie à incandescence, une bougie à broche incandescente, une bougie de préchauffage et/ou une bride chauffante.

6. Installation de démarrage selon l'une des revendications 1 à 5, dans laquelle le niveau de tension plus élevé du circuit intermédiaire (7b) est supérieur à 40 volts, en particulier supérieur à 100 volts.

7. Installation de démarrage selon la revendication 6, dans laquelle le niveau de tension plus élevé du circuit intermédiaire (7b) est situé dans une zone entre 200 volts et 400 volts.

8. Installation de démarrage selon la revendication 5, dans laquelle le circuit intermédiaire (7b) est un circuit intermédiaire à tension continue.

9. Installation de démarrage selon l'une des revendications 1 à 8, dans laquelle la machine électrique (4) servant de démarreur remplit également la fonction d'un générateur et est en particulier une machine à courant triphasé.

10. Installation de démarrage selon la revendication 9, dans laquelle la machine électrique (4) servant de démarreur remplit également une fonction de moteur d'entraînement du véhicule ou de moteur auxiliaire d'entraînement du véhicule et est alors aussi entièrement ou partiellement alimentée à partir de l'accumulateur d'énergie (12).
